# EUROPEAN PATENT SPECIFICATION

(11) **EP 3 211 023 B1**
(45) Date of publication and mention of the grant of the patent: **04.12.2019**
(21) Application number: 15853464.4
(22) Date of filing: 15.10.2015
(51) Int. Cl.: C08G 77/26, C07F 7/18

(54) **PHTHALONITRILE MONOMER MODIFIED WITH ORGANOSILICON FRAGMENTS**
MIT ORGANOSILICIUMFRAGMENTEN MODIFIZIERTES PHTHALODINITRILMONOMER
MONOMÈRE DE PHATOLONITRILE MODIFIÉ PAR DES FRAGMENTS ORGANIQUES DE SILICIUM ORGANIQUE

(30) Priority: 24.10.2014 RU 2014142910
(43) Date of publication of application: 30.08.2017
(73) Proprietor: Joint Stock Company Scientific and Production Association "Unichimtek" (JSC PSA "Unichimtek), Klimovsk, Moskovskaya Obl. 142181 (RU)
(72) Inventor: BABKIN, Aleksandr Vladimirovich, Kolomna Moskovskaya oblast 140411 (RU); ZODBINOV, Jel'vek Batrovich, Jelista Resp. Kalmykija 358014 (RU); KEPMAN, Aleksej Valer'evich, Moscow 107143 (RU); MALAKHO, Artem Petrovich, Moscow 117324 (RU); AVDEEV, Viktor Vasil'evich, Moscow 117777 (RU); BULGAKOV, Boris Anatol'evich, Moscow 11747 (RU)
(74) Representative: Glawe, Delfs, Moll
(86) International application number: PCT/RU2015/000677
(87) International publication number: WO 2016/064298

(56) References cited:
- WO-A1-2016/100259
- RU-C1- 2 487 901
- US-A- 4 234 712
- US-A- 5 159 054
- US-A- 5 965 268
- US-A1- 2004 181 029
- US-A1- 2014 039 151
- ALEXANDER V. BABKIN ET AL: "Low-melting siloxane-bridged phthalonitriles for heat-resistant matrices", EUROPEAN POLYMER JOURNAL., vol. 66, 1 May 2015 (2015-05-01), pages 452-457, XP055447557, GB ISSN: 0014-3057, DOI: 10.1016/j.eurpolymj.2015.03.015
- MATTHEW LASKOSKI ET AL: "Oligomeric aliphatic-aromatic ether containing phthalonitrile resins", JOURNAL OF POLYMER SCIENCE, PART A: POLYMER CHEMISTRY, vol. 53, no. 18, 23 April 2015 (2015-04-23), pages 2186-2191, XP055380207, ISSN: 0887-624X, DOI: 10.1002/pola.27659
- DEVENDRA KUMAR ET AL: "Thermally polymerizable bisaryloxy-bisimido-bisphthalonitriles containing dimethylsilane, hexafluoroisopropylidene, ether, and keto groups: Synthesis, characterization, and NMR study", JOURNAL OF POLYMER SCIENCE, PART A: POLYMER CHEMISTRY, vol. 31, no. 9, 1 August 1993 (1993-08-01) , pages 2319-2331, XP055447664, ISSN: 0887-624X, DOI: 10.1002/pola.1993.080310915
- CHEBI ID CHEBI:2573: "CHEBI:2573 - organosilicon compound", CHEBI NAME ORGANOSILICON COMPOUND, 2015,
- TAKAGI ET AL: "Synthesis and optical properties of fluorene-based polymers incorporating organosilicon unit", J. POLYMER SCI. PART A: POLYMER CJHEMISTRY, vol. 45, no. 21, 2007, pages 4786-4794,

## Description

### Field of the invention.

This invention relates to the field of organic chemistry, more particularly, to a method of obtaining modified phthalonitriles comprising organosilicon fragments and binding agents based thereon, and can be used in a variety of technical fields, for example, in aircraft and automobile manufacturing to produce polymer composite materials.

### Prior art.

The use of phthalonitrile monomers in preparing heat-resistant polymers are known in the prior art, e.g. US 5 159 054 A; Kumar et al., 1993, Journal of Polymer Science: Part A: Polymer Chemistry, Vol. 31, 2319-2331; US 2014/039151 A and US 5 965 268 A.

Most methods of obtaining phthalonitrile monomers and their derivatives are performed in aprotic solvents, such as dimethyl sulfoxide (DMSO) or dimethyl formamide (DMFA) in a mixture with benzene or toluene to remove water during the nucleophilic substitution reaction. These methods are described below.

A method is known to obtain a monomer based on 4,4'- dihydroxy benzophenone in accordance with the chart below.

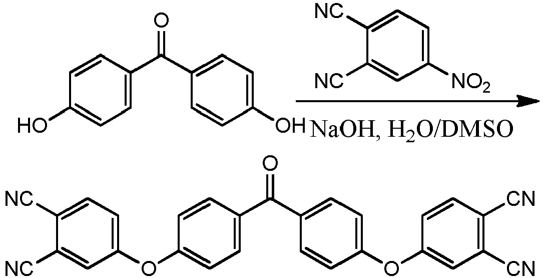

4,4'- ((carbonylbis (4,1-phenylene))bis(oxy))phthalonitrile was produced in a mixture of DMSO, benzene, water and sodium hydroxide. The mixture was boiled in a Dean-Stark apparatus, water removed, 4-nitrophthalonitrile added at ambient temperature, stirred for 12 hours, then diluted with water, filtered and washed with water and hot ethanol. The product yield constituted 94%. The melting temperature of the synthesized phthalonitrile compound was 216-218°C.

In [Sastri S.B., Keller T.M. Phthalonitrile Polymers: Cure Behavior and Properties. // Journal of Polymer Science: Part A: Polymer Chemistry. 1999. V. 37. P. 2105-2111.], the authors examine phthalonitrile monomers: 2,2-bis[4-(3,4-dicyanophenoxy)phenyl]hexafluoropropane (a) and 2,2-bis[4-(3,4-dicyanophenoxy)phenyl]propane (b).

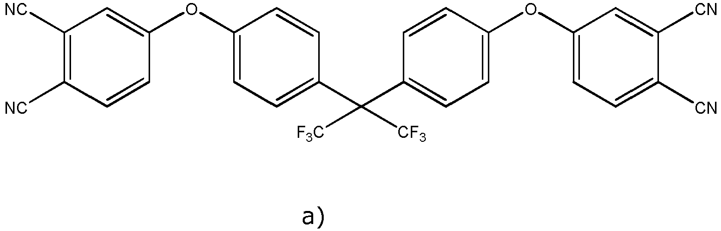

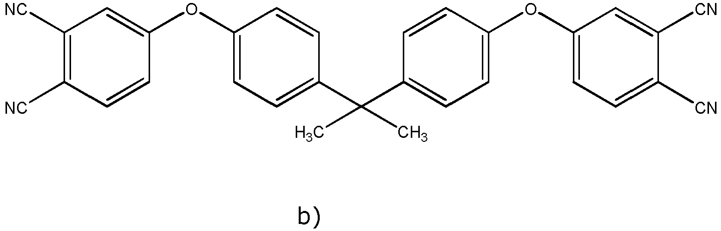

2,2-bis[4-(3,4-dicyanophenoxy)phenyl]hexafluoropropane was obtained by interaction of 4,4'-(1,1,1,3,3,3-hexafluoropropane-2,2-diyl)diphenol, 4-nitrophtalonitrile and potassium carbonate, with dimethyl formamide used as a solvent. The reaction mixture was stirred at ambient temperature for 24 hours and then poured into water. The precipitate was filtered and washed with water, methanol and acetonitrile. The obtained precipitate was recrystallized from acetonitrile. The yield constituted 74% [Yang C.-P., Su Y.-Y., Hsu M.-Y. Organo-soluble and Lightly-colored Fluorinated Polyimides Based on 2,2-Bis[4-(3,4- dicarboxyphenoxy)phenyl]hexafluoropropane Dianhydride and Aromatic Bis(ether amine)s Bearing Pendent Trifluoromethyl Groups. // Polymer Journal. 2006. V.38. Nº 2. P. 132-144].

The closest modified phthalonitrile to the one claimed herein is phthalonitrile disclosed in Application US2004181029 with a formula below: 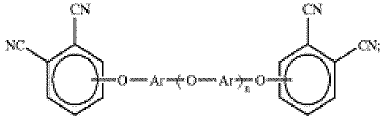 where Ar is an independently selected bivalent aromatic radical obtained by interaction of an aromatic compound containing two hydroxyls with an aromatic compound containing two chlorine atoms; the reaction is performed in the presence of a copper compound and cesium carbonate; and n is a number from 2 to 100.

This modified phthalonitrile is obtained by interaction of 3 or 4 nitrophthalonitriles with a hydroxyl-terminated aromatic ether oligomer.

The obtained modified phthalonitrile monomer possesses the following characteristics: glass transition temperature T_{g} = 42°C, cure temperature T_{cure} = 375°C, cured product glass transition temperature - over 550°C, physical state - solid.

For all other similar oligomers described above, even those whose glass transition temperature the authors tried to make as low as possible, it was still above 40°C; as a rule, in the range of 60-80°C.

The technical problem the invention solves is the production of phthalonitriles containing organosilicon fragments that combine the properties of traditional phthalonitrile types, namely high thermal resistance, with the advantages of organosilicon polymers i.e. high solubility while retaining thermal resistance, and a low glass transition point ensuring viscous liquid or semi-solid physical state at ambient temperatures.

Another technical problem to be solved by this invention is obtaining phthalonitrile monomers with acceptable processing properties to produce binders on their basis with lower melting points and lower viscosity for prepreg and composite material production, including by the injection technology.

This problem is solved by a phthalonitrile monomer modified with organosilicon fragments characterized by the general formula below: 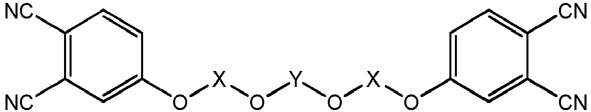
where X is a bivalent aromatic radical; and
Y is an organosilicon fragment Y selected from the group consisting of SiR¹R² and SiR¹R²-O-SiR¹R², where R¹ and R² are selected from the group consisting of CH₃, C₆H₅, and HC=CH₂.

In particular embodiments of the invention, the problem is solved by a phthalonitrile monomer that comprises, as its bivalent aromatic radical X, a radical selected from the group consisting of: 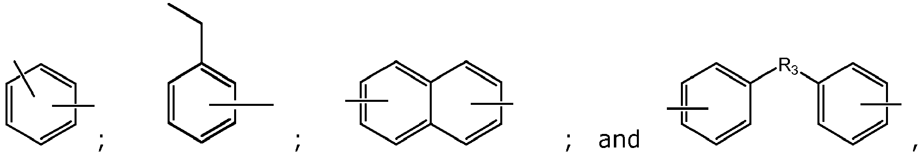 where R₃ is a radical selected from the group consisting of CH₂, C(CH₃)₂, C(CF₃)₂, SO₂. The problem is also solved by a method of producing phtalonitrile monomer modified with organosilicon fragments, in accordance with which a hydroxyl-containing phtalonitrile is obtained at first, and then the above mentioned hydroxyl-containing phtalonitrile is subjected to interaction with a substituted dichlorosilane in anhydrous aprotic solvent in the presence of a base, with the subsequent extraction of the target product, i.e. phtalonitrile monomer modified with organosilicon fragments, from the interaction products.

In particular embodiments of the invention the problem is also solved by obtaining a hydroxyl-containing phtalonitrile by interaction of 4-nitrophtalonitrile with a dihydroxyl-containing aromatic compound in an aprotic solvent in an inert atmosphere in the presence of an inorganic base.

It is practicable to extract the target product by means of a series of successive filtrations of the interaction products obtaining a filtrate and a precipitate, evaporating the filtrate, dissolving the evaporation product and extracting the target product therefrom. Tetrahydrofuran can be used as the anhydrous aprotic solvent, and tertiary amines as the base.

The problem is also solved by a binder comprising a phtalonitrile monomer modified with organosilicon fragments disclosed above and an aromatic diamine as a polymerization initiator.

The binder may also contain an aromatic diamine in an amount of up to 10 mass %. The binder may be used as a binding agent to produce polymer composites by the infusion technology.

The problem is also solved by means of a prepreg made of the binder and a reinforcing element.

In particular embodiments of the invention, the prepreg may contain, as a reinforcing element, an element selected from the group consisting of unidirectional carbon tapes, carbon fabrics, fiberglass fabrics, unidirectional fiberglass tapes, chopped carbon fibers, and chopped fiberglass fibers.

The invention consists in the following.

A novel approach to reducing the melting temperature of phtalonitrile monomers consists in the introduction of the siloxane -O-SiR₂-O- group. The introduction of such flexible fragment significantly increases the mobility of molecule fragments. Siloxane groups are, as a rule, thermally stable. The C-O-Si bond has not been widely used up to this moment to produce new polymers, which is thought to be related to low hydrolytic stability thereof.

The data described have determined the choice of the siloxane group as the fragment ensuring the reduction of the melting temperature of the phthalonitrile binder.

The introduction of organosilicon fragments results in lower glass transition temperatures of target products due to siloxane fragment flexibility without any loss of thermal stability, which is characteristic of the above-described cured phthalonitrile monomers.

The claimed technical solution proposes to perform synthesis of phthalonitriles containing organosilicon fragments in the medium of an anhydrous aprotic solvent in the course of a reaction between two equivalents of an anhydrous hydroxyl-containing phthalonitrile in the presence of a base, for example, a tertiary amine, with one equivalent of a substituted dichlorosilane with a variable chemical structure.

Any hydroxyl-containing phthalonitrile may be used for the purposes of this invention, for example, 4-hydroxyphtalonitrile; 4-(2-hydroxyphenoxy)phthalonitrile; 4-(3-hydroxyphenoxy)phthalonitrile; 4-(4-hydroxyphenoxy)phthalonitrile; 4-((6-hydroxynaphthalene-2-yl)oxy)phthalonitrile; 4-((5-hydroxynaphthalene-1-yl)oxy)phthalonitrile; 4-(4-(1,1,1,3,3,3-hexafluor-2-(4-hydroxyphenyl)propane-2-yl)phenoxy)phthalonitrile; 4-(4-(hydroxymethyl)phenoxy)phthalonitrile; 4-(3-(hydroxymethyl)phenoxy)phthalonitrile; 4-(2-(hydroxymethyl)phenoxy)phthalonitrile. This list in not exhaustive.

Thus, in one specific embodiment of this invention, a reaction was conducted between 4-nitrophthalonitrile and a dihydroxyl-containing aromatic compound in an aprotic solvent in an inert atmosphere in the presence of a base (potassium carbonate) to obtain a hydroxyl-containing phthalonitrile. At the same time, any dihydroxyl-containing aromatic compound suitable for the purpose may be used, with multiple compounds of that kind known in the state of the art, for example, 4-hydroxybenzyl alcohol (4-hydroxymethylphenol); 3-hydroxybenzyl alcohol; 2-hydroxybenzyl alcohol; rezorcine; pyrocatechin; hydroquinone; 1,8-dihydroxynaphthalene; bisphenol A; bisphenol F; bisphenol M etc.

The use of anhydrous aprotic solvents, both at the stage of obtaining hydroxyl-containing phthalonitrile and at the stage of modified phthalonitrile synthesis, makes it possible to ensure a high yield of phthalonitrile synthesis.

Any anhydrous aprotic solvent may be used for the purposes of this invention, but for some embodiments of this invention it may be practicable to use such solvents as anhydrous tetrahydrofuran (THF), diethyl ether, dimethyl formamide, dimethylacetamide, and N-methyl-2-pyrrolidone, widely used in the art to obtain phthalonitrile solutions (see, for example, RU2281952). The above compounds ensure a higher yield of the target product.

In introducing organosilicon fragments, the extraction of phthalonitrile target products from aprotic solvents can be difficult due to their high solubility in the solvent.

It is well-known that chlorine substituted silanes, for example, dimethyldichlorosilane, are the principal raw material for obtaining a variety of organosilicon products. In producing alkoxysilanes, considerable quantities of side products are formed: simple ethers, chloroalkanes, polysiloxanes etc. Their formation requires an excessive amount of alcohol to complete the reaction. The reaction between alkoxysilanes and hydrogen chloride is reversible, that is why quick and effective removal of hydrogen chloride from the reaction zone makes it possible to significantly intensify the process and increase the yield of the target product.

In practice, bases are often used to bind hydrogen chloride, for example, tertiary amines such as pyridine or triethylamine, as well as inorganic bases, such as, for example, base metal carbonates or phosphates, which bind hydrogen chloride.

Any dichlorosilanes may be used for the purposes of this invention, for example, dimethyldichlorosilane; methylphenyldichlorosilane; diphenyldichlorosilane; 1,1,3,3-tetramethyl-1,3-dichlorodisiloxane; 1,3-dimethyl-1,3-dichloro-1,3-diphenyldisiloxane; 1,3-dichloro-1,1,3,3-tetraphenyldisiloxane.

The synthesis chart of the claimed method is shown below.

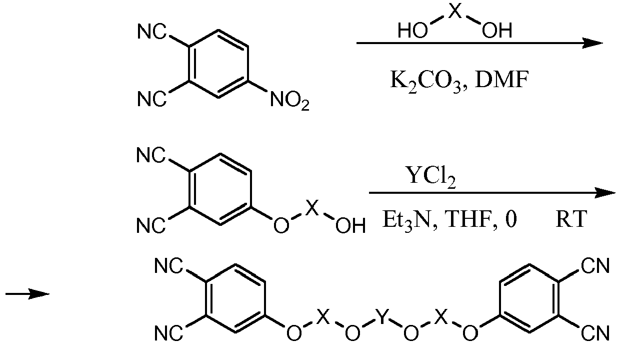

The obtained phthalonitrile monomer modified with organosilicon fragments is a viscous liquid or semi-solid substance at ambient temperatures.

A phthalonitrile monomer modified with organosilicon fragments may be used to produce a binder that can be used to produce prepregs or composite materials; it is particularly useful for the production of composites by the injection or infusion method. The binder, apart from a phthalonitrile monomer modified with organosilicon fragments, additionally contains an aromatic diamine as a polymerization initiator. In the best embodiments of the invention the quantity of aromatic diamine does not exceed 10 mass %.

To initiate polymerization, such aromatic diamines may be used as 4,4'-diaminodiphenylmethane, 4,4'-diaminodiphenylsulfone, 4,4'-(1,3-phenylenebis(oxy))dianiline, 4,4'-(1,4-phenylenebis(oxy))dianiline, 4,4'-((sulphonylbis(4,1-phenylene))bis(oxy))dianiline, or 3,3'-((sulphonylbis(4,1-phenylene))bis(oxy))dianiline. A prepreg is obtained by impregnating the obtained binder into a reinforcing element, the reinforcing element being selected from a broad range of materials from reinforcement fibers to fabrics made from such fibers.

The method is illustrated by the following examples.

The structure and properties of phthalonitriles synthesized in accordance with the Examples are shown in Table 1.

### Example 1.

Phthalonitrile 4-[4-(hydroxymethyl)phenoxy]benzene-1,2-dicarbonitrile monomer modified with organosilicon fragments was obtained.
1. At the first stage, a hydroxyl-containing phthalonitrile was obtained in accordance with the following.
   5 g of 4-hydroxymethylphenol, 5.56 g of potassium carbonate and 30 ml of dimethyl formamide were added into a 250-ml three-neck flask equipped with a reflux condenser with a tap stopper while stirring on a magnetic mixer. The reaction mixture was cooled to 0°C, then 6.97 g of 4-nitrophtalonitrile was added to the mixture and left to stir for 24 hours. On the following day, the reaction mixture was heated at 70° C for 6 hours, then cooled to the ambient temperature and poured into a 500 ml of cold water. The brown precipitate that formed was filtered, dissolved in methylene chloride, and three times subjected to extraction by water. The lower fraction was decanted, and methylene chloride was evaporated on a rotary evaporator.
   4-[4-(hydroxymethyl)phenoxy]benzene-1,2-dicarbonitrile was obtained. The yield constituted 5.32 g (49.63 %).
2. At the second stage, 4,4'-(((((methyl(phenyl)silane diyl)bis(oxy)) bis(methylene))bis(4,1-phenylene))bis(oxy))diphtalonitrile was obtained (see table 1, line 4).

5 g (20 mmol) of 4-[4-(hydroxymethyl)phenoxy]benzene-1,2-dicarbonitrile was added into a 250-ml three-neck flask equipped with a reflux condenser with a tap stopper, and then an apparatus was connected containing THF (absolute). From the apparatus containing THF, 100 ml of solvent was added and stirred on a magnetic mixer to full dissolution. Then the glass stopper was replaced with a rubber cork, and 5.57 ml (40 mmol) of triethylamine was added. After that, 1.908 g (10 mmol) of phenylmethyldichlorosilane was added and left to stir for a night. The reaction mixture was filtered, precipitate washed with 100 ml of THF, solution evaporated on an oil pump at 100°C and the obtained substance dissolved in methylene chloride. Using column chromatography, the product was extracted in the solution using a mixture of hexane and methylene chloride as an eluent. The solution was evaporated on a rotor evaporator. The yield constituted 4.17 g (67.42 %).

### Example 2.

Phthalonitrile 4,4'-(((((dimethylsilanediyl)bis(oxy))bis(methylene))bis(4,1-phenylene))bis(oxy)) diphthalonitrile modified with organosilicon fragments was obtained (see table 1, line 2).
1. For that purpose, at first 4-[4-(hydroxymethyl)phenoxy]benzene-1,2-dicarbonitrile was obtained in accordance with stage 1 of Example 1.
2. Then 5 g (20 mmol) of the obtained 4-[4-(hydroxymethyl)phenoxy]benzene-1,2- dicarbonitrile was added into a 250-ml three-neck flask equipped with a reflux condenser with a tap stopper, and then an apparatus was connected containing THF (absolute). From the apparatus containing THF, 50 ml of solvent was added and stirred on a magnetic mixer to full dissolution. Then the glass stopper was replaced with a rubber cork, and 5.57 ml (40 mmol) of triethylamine was added. After that, 1.29 g (10 mmol) of dimethyldichlorosilane was added and left to stir for a night. The reaction mixture was filtered, precipitate washed with 100 ml of THF, solution evaporated on an oil pump at 100°C and the obtained substance dissolved in methylene chloride. Using column chromatography, the product was extracted in the solution using a mixture of hexane and methylene chloride as an eluent. The solution was evaporated on a rotor evaporator. The yield constituted 3.503 g (62.98%).

### Example 3.

4,4'-(((((diphenylsilane diyl)bis(oxy))bis(methylene))bis(4,1-phenylene))bis(oxy))diphthalonitrile was obtained (see table 1, line 6).
1. At the first stage, 4-[4-(hydroxymethyl)phenoxy]benzene-1,2-dicarbonitrile was obtained in accordance with stage 1 of Example 1.
2. Then 3.62 g (14 mmol) of the obtained 4-[4-(hydroxymethyl)phenoxy]benzene-1,2-dicarbonitrile was added into a 250-ml three-neck flask equipped with a reflux condenser with a tap stopper, and then an apparatus was connected containing THF (absolute). From the apparatus containing THF, 35 ml of solvent was added and stirred on a magnetic mixer to full dissolution. Then the glass stopper was replaced with a rubber cork, and 4.04 ml (29 mmol) of triethylamine was added. After that, the apparatus was cooled to 0°C, 1.83 g (7 mmol) of diphenyldichlorosilane added and left to stir for the night. The reaction mixture was filtered, precipitate washed with 100 ml of THF, solution evaporated on an oil pump at 100°C and the obtained substance dissolved in methylene chloride. Using column chromatography, the product was extracted in the solution using a mixture of hexane and methylene chloride as an eluent. The solution was evaporated on a rotor evaporator. The yield constituted 4.46 g (90.65%).

### Example 4

4,4'-(((((methyl(phenyl)silane diyl)bis(oxy))bis(methylene))bis(3,1-phenylene))bis(oxy))diphthalonitrile was obtained (see table 1, line 3).
1. At the first stage of the process, a hydroxyl-containing phtalonitrile was obtained with the following composition: 4-[3-(hydroxymethyl)phenoxy]benzene-1,2-dicarbonitrile, by the following procedure.
   7 g (56 mmol) of 3-hydroxymethylphenol, 7.78 g (56 mmol) of potassium carbonate and 40 ml of dimethyl formamide were added into a 250-ml three-neck flask equipped with a reflux condenser with a tap stopper while stirring on a magnetic mixer. The reaction mixture was cooled to 0°C, then 9.69 g (56 mmol) of 4-nitrophtalonitrile was added to the mixture and left to stir for 24 hours. On the following day, the reaction mixture was heated at 70° C for 6 hours, then cooled to the ambient temperature and poured into a 500 ml of cold water. The brown precipitate that formed was filtered, dissolved in methylene chloride, and three times subjected to extraction by water. The lower fraction was decanted, and methylene chloride was evaporated on a rotary evaporator.
2. 10 g (40 mmol) of 4-[3-(hydroxymethyl)phenoxy]benzene-1,2-dicarbonitrile and 100 ml of solvent tetrahydrofuran (THF) were added and stirred to full dissolution. Then 9.107 ml of triethylamine was added. After that, 3.82 g (20mmol) of phenylmethyldichlorosilane was added to the flask and left to stir for the night. The reaction mixture was filtered, precipitate washed with 100 ml of THF, solution evaporated on an oil pump at 100°C and the obtained substance dissolved in methylene chloride. Using column chromatography, the product was extracted in the solution using a mixture of hexane and methylene chloride as an eluent. The solution was evaporated on a rotor evaporator. The yield constituted 7.42 g (59.79%).

### Example 5.

4,4'-(((((dimethylsilanediyl)bis(oxy))bis(methylene))bis (3,1-phenylene))bis(oxy))diphthalonitrile was obtained (see table 1, line 1).
1. At the first stage of the process, a hydroxyl-containing phthalonitrile was obtained with the following composition: 4-[3-(hydroxymethyl)phenoxy]benzene-1,2-dicarbonitrile, in accordance with stage 1 of Example 4.
2. 5 g (20 mmol) of 4-[3-(hydroxymethyl)phenoxy]benzene-1,2-dicarbonitrile was added into a 250-ml three-neck flask equipped with a reflux condenser with a tap stopper, and then an apparatus was connected containing THF (absolute). From the apparatus containing THF, 50 ml of solvent was added and stirred on a magnetic mixer to full dissolution. Then the glass stopper was replaced with a rubber cork, and 5.57 (40 mmol) ml of triethylamine was added. After that, 1.29 g (10 mmol) of dimethyldichlorosilane was added and left to stir for the night. The reaction mixture was filtered, precipitate washed with 100 ml of THF, solution evaporated on an oil pump at 100°C and the obtained substance dissolved in methylene chloride. Using column chromatography, the product was extracted in the solution using a mixture of hexane and methylene chloride as an eluent. The solution was evaporated on a rotor evaporator. The yield constituted 2.41 g (43.30%).

### Example 6.

4,4'-(((((diphenylsilanediyl)bis(oxy))bis(methylene))bis(3,1-phenylene))bis(oxy))diphthalonitrile (5) was obtained.
1. At the first stage of the process, a hydroxyl-containing phthalonitrile was obtained with the following composition: 4-[3-(hydroxymethyl)phenoxy]benzene-1,2-dicarbonitrile, similarly to stage 1 of Example 4.
2. 5 g (20 mmol) of 4-[3-(hydroxymethyl)phenoxy]benzene-1,2-dicarbonitrile was added into a 250-ml three-neck flask equipped with a reflux condenser with a tap stopper, and then an apparatus was connected containing THF (absolute). From the apparatus containing THF, 50 ml of solvent was added and stirred on a magnetic mixer to full dissolution. Then the glass stopper was replaced with a rubber cork, and 5.57 ml (40 mmol) of triethylamine was added. After that, the apparatus was cooled to 0°C, 2.532 g (10 mmol) of diphenyldichlorosilane added and left to stir for the night. The reaction mixture was filtered, precipitate washed with 100 ml of THF, solution evaporated on an oil pump at 100°C and the obtained substance dissolved in methylene chloride. Using column chromatography, the product was extracted in the solution using a mixture of hexane and methylene chloride as an eluent. The solution was evaporated on a rotor evaporator. The yield constituted 2.89 g (42.46%).

Subsequently, the binder was used to produce a prepreg.

For that purpose, the binder consisting of modified phthalonitriles according to Examples 1 and 3 was fed onto the rollers. As an aromatic diamine, -(1,3-phenylenebis(oxy))dianiline in the amount of 1 mass % (for the phthalonitrile of Example 2) and -(1,3-phenylenebis(oxy))dianiline in the amount of 1 mass % (for the phthalonitrile of Example 4) were used. A binder film with a preset thickness calculated as 40 mass % of the surface density of the final prepreg was transferred onto siliconized paper by means of the rollers. After that, carbon fabric or unidirectional tape was aligned with the binder film on paper, and calendering took place between two siliconized papers sheets with calenders heated to 100°C ensuring uniform distribution and impregnation of the binder into the carbon fibers.

The obtained prepreg was rolled up into rolls.

The prepreg possesses stickiness at ambient temperatures.

The binder made from modified phthalonitriles in accordance with Examples 2 and 4 was tested as a binding agent for the infusion technology. 4,4'-diaminodiphenylsulphone in the amount of 3% was used as a polymerization initiator.

Eight layers of unidirectional carbon tape with a density of 200 g/m² were laid in vacuum infusion molds, then air was removed and the binder pre-heated to 100°C was fed at 110°C inside the mold. Then the product was cured in a stepwise manner at 200°C, 250°C, 300°C, 350°C, and 375°C.

As follows from the data of Table 1, the proposed modified phthalonitrile monomer possesses a low glass transition temperature Tg, which ensures the physical state of the phthalonitrile monomer at ambient temperatures as a viscous liquid or a semi-solid (glass-like) substance, which allows using it, in particular, for prepreg and composite production by the infusion technology. Prepregs thus obtained possess improved viability due to a low glass transition temperature.

Besides, the monomer has a high softening temperature, which testifies to its high thermal resistance and, consequently, high thermal resistance of composites produced.

**Table 1**

| Examples | Designation | Structural formula | Ts, °C (TMA) | Tg, °C | Physical state at ambient temperatures |
|---|---|---|---|---|---|
| 1 | m-SiMe₂PN | 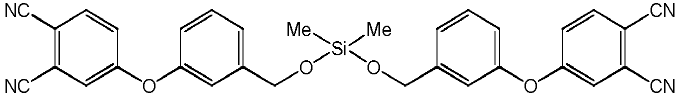 | 413 | -1 | Viscous liquid. |
| 2 | p-SiMe₂PN | 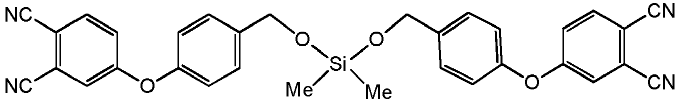 | 432 | 2 | Viscous liquid. |
| 3 | m-SiMePhPN | 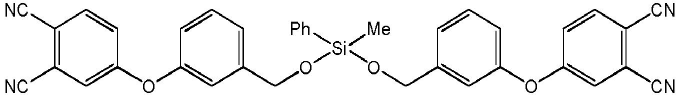 | 428 | 11 | Viscous liquid. |
| 4 | p-SiMePhPN | 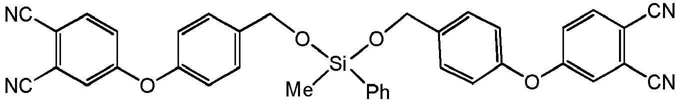 | 420 | 12 | Viscous liquid. |
| 5 | m-SiPh₂PN | 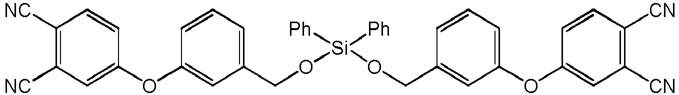 | 413 | 21 | Semi-solid. |
| 6 | p-SiPh₂PN | 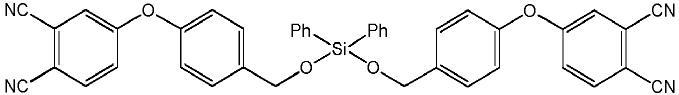 | 424 | 26 | Semi-solid. |

## Claims

1. A phthalonitrile monomer modified by organosilicon fragments **characterized by** the following general formula: 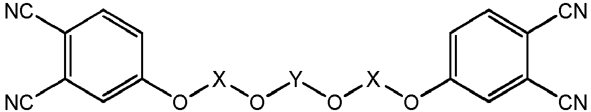
wherein X is a bivalent aromatic radical, and
Y is an organosilicon fragment,
**characterized in that** the organosilicon fragment Y is selected from the group consisting of SiR¹R² and SiR¹R²-O-SiR¹R², wherein R¹ and R² are radicals selected from the group consisting of CH₃, C₆H₅, and HC=CH₂.

2. The phthalonitrile monomer according to claim 1, **characterized in that** the bivalent aromatic radical X is a radical selected from the group consisting of: 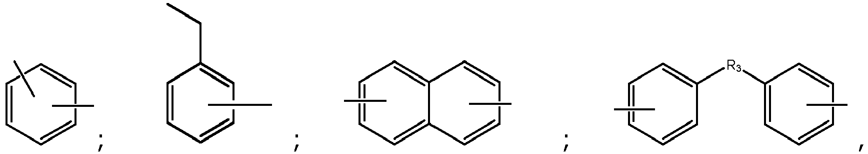 wherein R₃ is a radical selected from the group including CH₂, C(CH₃)₂, C(CF₃)₂, and SO₂.

3. A method of obtaining a phthalonitrile monomer modified with organosilicon fragments in accordance with any of the preceding claims, **characterized in that** at first, a hydroxyl-containing phthalonitrile is obtained, and then the aforesaid hydroxyl-containing phthalonitrile is caused to interact with dichlorosilane in an anhydrous aprotic solvent in the presence of a base, with subsequent extraction from the interaction products of the target product being a phthalonitrile monomer modified with organosilicon fragments.

4. The method according to claim 3, **characterized in that** the hydroxyl-containing phthalonitrile is obtained by interaction of 4-nitrophthalonitrile with a dihydroxyl-containing aromatic compound in an aprotic solvent in an inert atmosphere in the presence of an inorganic base.

5. The method according to claim 3, **characterized in that** the extraction of the target product is performed by filtration of the interaction products and obtaining a filtrate and a precipitate, subsequent filtrate evaporation, dissolution of the product obtained by evaporation, and extraction of the target product therefrom.

6. The method according to claim 3, **characterized in that** tetrahydrofuran is used as an anhydrous aprotic solvent.

7. The method according to claim 3, **characterized in that** tertiary amines are used as a base.

8. A binder **characterized in that** it comprises a phthalonitrile monomer modified by organosilicon fragments in accordance with any of the preceding claims, and an aromatic diamine as a polymerization initiator.

9. The binder of claim 8, **characterized in that** it comprises an aromatic diamine in an amount of up to 10 mass %.

10. The binder of claim 8, **characterized in that** it is used as a binder to produce polymer composite materials by the infusion technology.

11. A prepreg **characterized in that** it is made of the binder of claim 8 and a reinforcing element.

12. The prepreg of claim 11, **characterized in that** it comprises, as a reinforcing element, an element selected from the group consisting of unidirectional carbon tapes, carbon fabrics, fiberglass fabrics, unidirectional fiberglass tapes, chopped carbon fibers, and chopped fiberglass fibers.

## Patentansprüche

1. Phthalonitrilmonomer, modifiziert durch Organosilikonfragmente, **gekennzeichnet durch** die folgende allgemeine Formel: 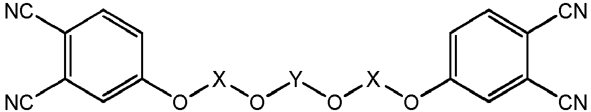
wobei X ein zweiwertiger aromatischer Rest ist und
Y ein Organosilikonfragment ist, **dadurch** gekennzeichnet, dass das Organosilikonfragment Y ausgewählt ist aus der Gruppe bestehend aus SiR¹R² und SiR¹R²-O-SiR¹R², wobei R¹ und R² Gruppen sind, ausgewählt aus der Gruppe bestehend aus CH₃, C₆H₅ und HC=CH₂.

2. Phthalonitrilmonomer nach Anspruch 1, **dadurch gekennzeichnet, dass** der zweiwertige aromatische Rest X ein Rest ist, ausgewählt aus der Gruppe bestehend aus: 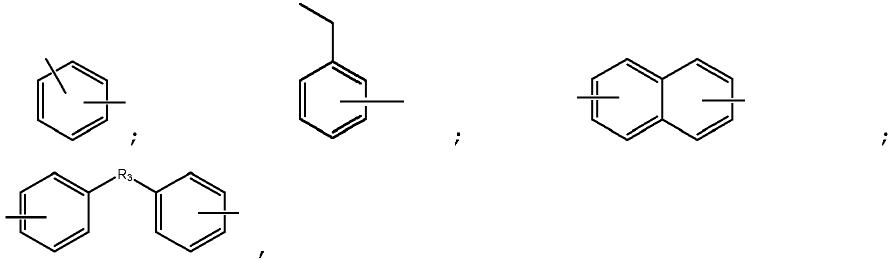 wobei R₃ eine Gruppe ist, ausgewählt aus der Gruppe umfassend CH₂, C(CH₃)₂, C(CF₃)₂ und SO₂.

3. Verfahren zum Erhalten eines Phthalonitrilmonomers, das mit Organosilikonfragmenten gemäß einem der vorstehenden Ansprüche modifiziert ist, **dadurch gekennzeichnet, dass** zunächst ein hydroxylhaltiges Phthalonitril erhalten wird und dann das vorgenannte hydroxylhaltige Phthalonitril in einem wasserfreien aprotischen Lösungsmittel in Gegenwart einer Base mit Dichlorsilan in Wechselwirkung gebracht wird, wobei die anschließende Extraktion aus den Wechselwirkungsprodukten des Zielprodukts ein mit Organosilikonfragmenten modifiziertes Phthalonitrilmonomer ist.

4. Verfahren nach Anspruch 3, **dadurch gekennzeichnet, dass** das hydroxylhaltige Phthalonitril durch Wechselwirkung von 4-Nitrophthalonitril mit einer dihydroxylhaltigen aromatischen Verbindung in einem aprotischen Lösungsmittel in einer inerten Atmosphäre in Gegenwart einer anorganischen Base erhalten wird.

5. Verfahren nach Anspruch 3, **dadurch gekennzeichnet, dass** die Extraktion des Zielprodukts durch Filtration der Wechselwirkungsprodukte und Erhalt eines Filtrats und eines Niederschlags, nachfolgende Filtratverdampfung, Auflösung des durch Verdampfung erhaltenen Produkts und Extraktion des Zielprodukts daraus durchgeführt wird.

6. Verfahren nach Anspruch 3, **dadurch gekennzeichnet, dass** Tetrahydrofuran als wasserfreies aprotisches Lösungsmittel verwendet wird.

7. Verfahren nach Anspruch 3, **dadurch gekennzeichnet, dass** als Base tertiäre Amine verwendet werden.

8. Bindemittel, **dadurch gekennzeichnet, dass** es ein Phthalonitrilmonomer, das durch Organosilikonfragmente gemäß einem der vorstehenden Ansprüche modifiziert ist, und ein aromatisches Diamin als Polymerisationsinitiator umfasst.

9. Bindemittel nach Anspruch 8, **dadurch gekennzeichnet, dass** es ein aromatisches Diamin in einer Menge von bis zu 10 Masse-% umfasst.

10. Bindemittel nach Anspruch 8, **dadurch gekennzeichnet, dass** es als Bindemittel zur Herstellung von Polymerverbundwerkstoffen bei der Infusionstechnologie verwendet wird.

11. Vorimprägniertes Faserprodukt, **dadurch gekennzeichnet, dass** er aus dem Bindemittel nach Anspruch 8 und einem Verstärkungselement hergestellt ist.

12. Vorimprägniertes Faserprodukt nach Anspruch 11, **dadurch gekennzeichnet, dass** er als Verstärkungselement ein Element umfasst, das aus der Gruppe ausgewählt ist, die aus unidirektionalen Kohlenstoffbändern, Kohlenstoffgeweben, Glasfasergeweben, unidirektionalen Glasfaserbändern, geschnittenen Kohlenstofffasern und geschnittenen Glasfaserfasern besteht.

## Revendications

1. Monomère de phtalonitrile modifié par des fragments organosilicium **caractérisé par** la formule générale suivante : 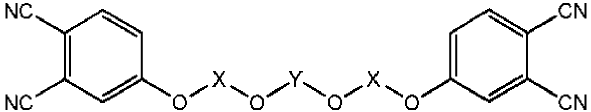 dans laquelle X est un radical aromatique bivalent, et Y est un fragment organosilicium, **caractérisé en ce que**
le fragment organosilicium Y est choisi dans le groupe constitué de SiR¹R² et SiR¹R²-O-SiR¹R², dans lequel R¹ et R² sont des radicaux choisis dans le groupe constitué de CH₃, C₆H₅ et HC=CH₂.

2. Monomère de phtalonitrile selon la revendication 1, **caractérisé en ce que** le radical aromatique bivalent X est un radical choisi dans le groupe constitué de : 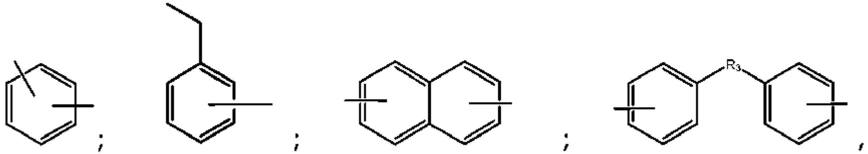 dans lequel R₃ est un radical choisi dans le groupe comprenant CH₂, C(CH₃)₂, C(CF₃)₂, et SO₂.

3. Procédé d'obtention d'un monomère de phtalonitrile modifié avec des fragments organosilicium selon l'une quelconque des revendications précédentes, **caractérisé en ce que**, dans un premier temps, un phtalonitrile contenant hydroxyle est obtenu, puis le phtalonitrile contenant hydroxyle ci-dessus est amené à interagir avec du dichlorosilane dans un solvant aprotique anhydre en présence d'une base, avec extraction consécutive à partir des produits d'interaction du produit cible étant un monomère de phtalonitrile modifié avec des fragments organosilicium.

4. Procédé selon la revendication 3, **caractérisé en ce que** le phtalonitrile contenant hydroxyle est obtenu par interaction de 4-nitrophtalonitrile avec un composé aromatique contenant dihydroxyle dans un solvant aprotique dans une atmosphère inerte en présence d'une base inorganique.

5. Procédé selon la revendication 3, **caractérisé en ce que** l'extraction du produit cible est effectuée par filtration des produits d'interaction et obtention d'un filtrat et d'un précipité, évaporation consécutive du filtrat, dissolution du produit obtenu par évaporation, et extraction du produit cible à partir de celui-ci.

6. Procédé selon la revendication 3, **caractérisé en ce que** le tétrahydrofurane est utilisé en tant que solvant anhydre aprotique.

7. Procédé selon la revendication 3, **caractérisé en ce que** des amines tertiaires sont utilisées en tant que base.

8. Liant **caractérisé en ce qu'**il comprend un monomère de phtalonitrile modifié par des fragments organosilicium selon l'une quelconque des revendications précédentes, et une diamine aromatique en tant qu'initiateur de polymérisation.

9. Liant selon la revendication 8, **caractérisé en ce qu'**il comprend une diamine aromatique en une quantité allant jusqu'à 10 % en masse.

10. Liant selon la revendication 8, **caractérisé en ce qu'**il est utilisé en tant que liant pour produire des matériaux composites polymères par la technologie d'infusion.

11. Préimprégné **caractérisé en ce qu'**il est constitué du liant selon la revendication 8 et d'un élément de renforcement.

12. Préimprégné selon la revendication 11, **caractérisé en ce qu'**il comprend, en tant qu'élément de renforcement, un élément choisi dans le groupe constitué de bandes de carbone unidirectionnelles, tissus de carbone, tissus de fibre de verre, bandes de fibre de verre unidirectionnelles, fibres de carbone hachées et fibres de verre hachées.
